# EUROPÄISCHE PATENTANMELDUNG

(11) **EP 0 913 078 A1**
(43) Veröffentlichungstag der Anmeldung: **06.05.1999**
(21) Anmeldenummer: 98120721.0
(22) Anmeldetag: 31.10.1998
(51) Int. Cl.: A01D 34/73, A01D 34/66

(54) **Mähwerk für Rasenmäher**

(30) Priorität: 03.11.1997 DE 19748475
(71) Anmelder: Horst Staiger & Söhne GmbH, 78126 Königsfeld-Erdmannsweiler (DE)
(72) Erfinder: Staiger, Jürgen, 78126 Königsfeld-Erdmannsweiler (DE)
(74) Vertreter: Patentanwälte Westphal, Mussgnug & Partner

(57) **Zusammenfassung**

Mähwerk für Rasenmäher mit einem Gehäuse (10) und mindestens einer im Gehäuse angeordneten motorgetriebenen Messerscheibe (18,20), an der Schneidmesser (22,24) befestigt sind. Paare einander gegenüberliegender Schneidmesser (22,24) stehen von der Messerscheibe parallel zu dieser nach außen, wobei jedes Paar aus einem Obermesser (22) und einem Untermesser (24) besteht. Die Schneidmesser (22,24) können schaufelartige Abkantungen (32) zur Erzielung einer Ventilatorwirkung aufweisen. Zweckmäßigerweise sind zwei gleichartige Messerscheiben (18,20) im Gehäuse nebeneinander angeordnet, wobei sich die Drehbereiche der jeweiligen Messer (22,24) gegenseitig überlappen.

## Beschreibung

Die Erfindung betrifft ein Mähwerk für Rasenmäher nach dem Oberbegriff des Anspruchs 1.

Bei bekannten Mähwerken dieser Art ist es oft lästig, daß das mehr oder weniger feuchte Mähgut an der Innenseite des Mähwerkgehäuses anhaftet und zusammenbackt, so daß die Drehung der Messerscheibe und der erwünschte Durchzug von Luft durch das Gehäuse, der das Mähgut transportiert, behindert wird.

Durch die Erfindung soll ein Mähwerk der eingangs genannten Art so verbessert werden, daß eine Behinderung der Drehung der Messerscheibe sowie des Luftdurchsatzes durch das Gehäuse nicht stattfindet.

Diese Aufgabe wird erfindungsgemäß durch die Merkmale des Anspruchs 1 gelöst.

Das Obermesser jedes Messerpaares schabt ständig etwa anhaftendes Mähgut von der Innenfläche des Gehäuses ab, so daß dieses im Luftstrom mitgenommen wird. Zudem erzeugt das Obermesser einen zusätzlichen Luftzug, so daß der Luftdurchsatz insgesamt gegenüber bekannten Messerscheiben mit einfachen Schneidmessern noch verbessert wird.

Die Unteransprüche betreffen vorteilhafte Ausgestaltungen der Erfindung. Insbesondere laßt sich die Erfindung besonders günstig verwirklichen, wenn die Schneidmesser gemäß Anspruch 3 als sogenannte Fliehkraftmesser ausgebildet und gegen Federkraft schwenkbar an der Messerscheibe befestigt sind. Um den Abstand zwischen den Schneidmessern eines Paares zu vergrößern, können sie gemäß Anspruch 4 geeignet abgekröpft sein, so daß sie in einem etwas größeren gegenseitigem Abstand parallel nach außen stehen. Dadurch wird der Transport von Mähgut und Luft durch das Mähwerk erleichtert.

Dabei kann gemäß Anspruch 5 wenigstens ein Schneidmesser jedes Paares, vorzugsweise das Untermesser, mit einer schaufelartigen Abkantung versehen sein, um ebenfalls den Luftdurchsatz zu vergrößern. Gewünschtenfalls kann auch noch das Obermesser eine gleichartige Abkantung zum Untermesser hin aufweisen (Anspruch 6).

Sehr zweckmäßig läßt sich die Erfindung auch auf Mähwerke anwenden, bei denen zwei nebeneinander angeordnete Messerscheiben vorgesehen sind, die gegenläufig angetrieben werden (Anspruch 7). Besonders vorteilhaft wirken sich die erfindungsgemäßen Maßnahmen bei einem solchen Mähwerk mit zwei Messerscheiben dann aus, wenn sich die Drehbereiche der Schneidmesser beider Messerscheiben gemäß Anspruch 8 etwas überlappen. In diesem Falle müssen allerdings die Messerscheiben gegenläufg synchron angetrieben und die Schneidmesser der beiden Messerscheiben gegeneinander winkelversetzt werden, da sie sich sonst behindern würden.

Nach Anspruch 9 und 10 kann mit dem erfindungsgemäßen Mähwerk auch wahlweise ein sogenanntes Mähmulchen durchgeführt werden, indem entweder die Drehrichtung der beiden Messerscheiben umgekehrt wird oder die beiden Messerscheiben gegenseitig ausgetauscht werden. In diesem Falle wird das Mähgut während des Mähens wieder nach vorne ausgeworfen.

Der Luftdurchsatz wird sich auch durch die Maßnahme nach Anspruch 11 weiter erhöhen, daß der untere Rand des Gehäuses etwas nach innen gewölbt wird.

Anhand der Figuren wird ein Ausführungsbeispiel der Erfindung beispielhaft näher erläutert. Es zeigt:
- Figur 1: eine schematische Rückansicht des erfindungsgemäßen Mähwerks,
- Figur 2: eine schematische Seitenansicht des in Fig.1 gezeigten Mähwerks in etwas vergrößertem Maßstab,
- Figur 3: eine schematische Aufsicht auf das Mähwerk gemäß Figuren 1 und 2, wobei der Maßstab gegenüber Fig.2 nochmals vergrößert ist,
- Figur 4: eine Aufsicht auf eine im Mähwerk gemäß Fig.1 verwendete Messerscheibe in gegenüber Fig.3 nochmals vergrößertem Maßstab,
- Figur 5: eine teilweise geschnittene Seitenansicht der Messerscheibe gemäß Fig.4 und
- Figur 6: einen Teilausschnitt der Messerbefestigung in einem gegenüber Fig.5 nochmals vergrößerten Maßstab.

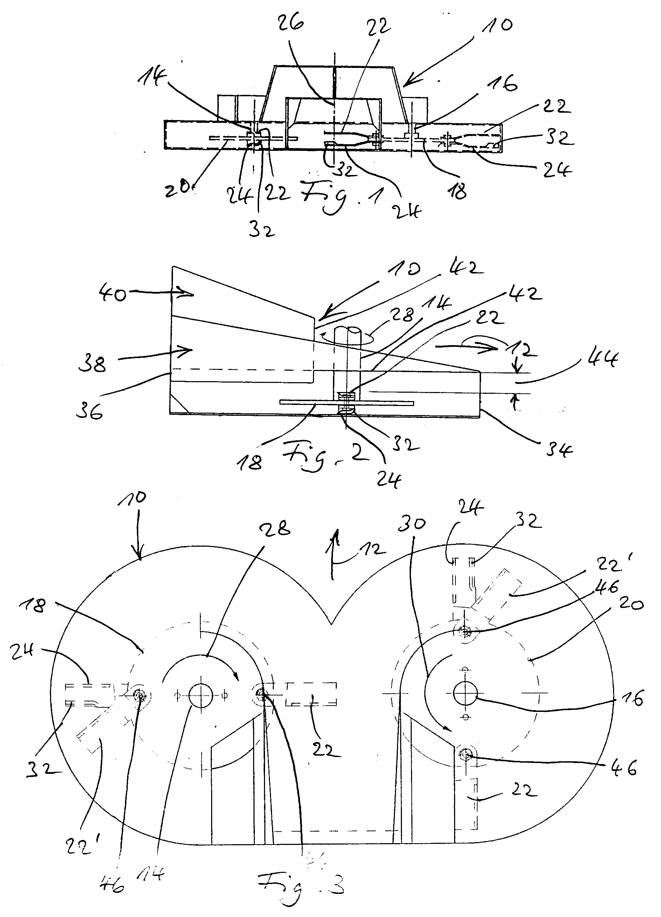

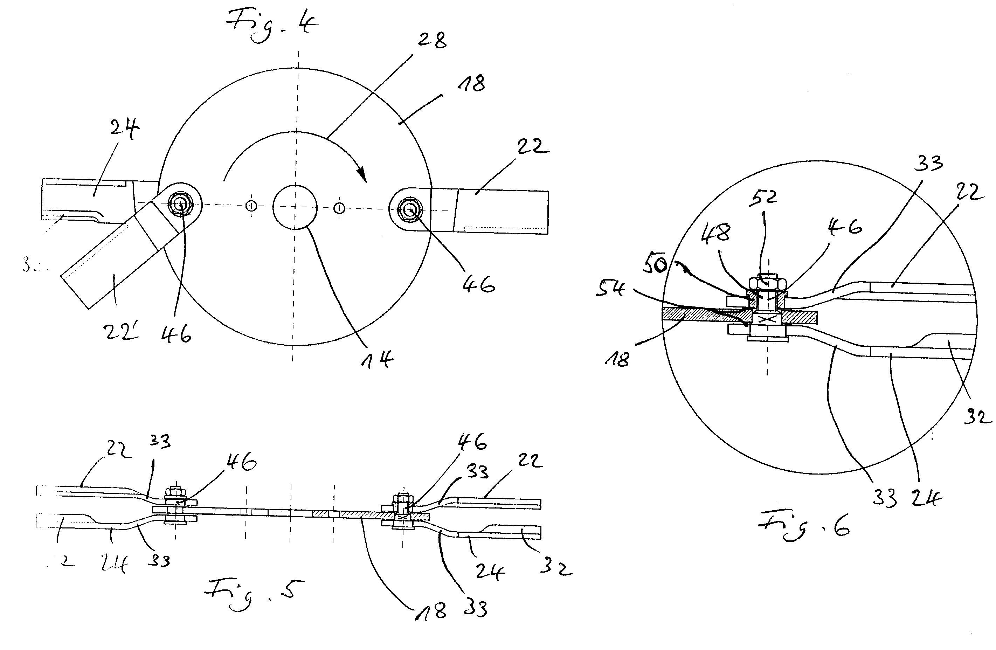

Bei der in den Figuren dargestellten Ausführungsform des erfindungsgemäßen Mähwerks sind in dem allgemein mit 10 bezeichneten Gehäuse bezüglich der Mährichtung entsprechend dem Pfeil 12 in Fig.2 nebeneinander zwei in nicht näher dargestellter Weise über je eine Antriebswelle 14 bzw. 16 motorisch angetriebene Messerscheiben 18 bzw. 20 angeordnet. Jede Messerscheibe 18,20 trägt nahe ihrem Umfang je ein Paar von Schneidmessern, deren jedes aus einem Obermesser 22 und einem Untermesser 24 besteht. Die Messerpaare 22,24 stehen von ihrer Messerscheibe 18,20 jeweils etwas über die Mittelebene 26 des Gehäuses 10 zur jeweils anderen Messerscheibe 20,18 vor, so daß sich die Schnittbereiche der beiden Messerscheiben 18,20 im Mittelbereich überschneiden. Dadurch wird nicht nur eine hervorragende Schnittqualität, sondern auch eine ausgezeichnete Förderung von Mähgut und Luft durch das Gehäuses erreicht. Damit sich die Messerpaare 22,24 der beiden Messerscheiben 18,20 nicht gegenseitig behindern, müssen die beiden Messerscheiben 18,20 gegenläufig synchron angetrieben werden, was in einer dem Fachmann geläufigen Weise durchs Zwangskopplung der beiden nicht gezeigten Antriebsmotoren erfolgen kann. Gleichzeitig müssen die Schneidmesser 22,24 an den beiden Messerscheiben 18,20 in Umfangsrichtung derselben gegeneinander, im dargestellten Ausführungsbeispiel jeweils um 90°, versetzt werden. Die Drehung der beiden Messerscheiben 18,20 erfolgt dabei normalerweise in der durch die Pfeile 28 und 30 in Fig.3 gekennzeichneten Weise. Soll dagegen die Förderrichtung der Luft und des Mähgutes umgekehrt werden, um ein Mähmulchen mit gleichzeitigem Mähen und Ablegen des Mähgutes vor dem vorderen Ende des Gehäuses zu ermöglichen, muß entweder die Drehrichtung der beiden Messerscheiben 18,20 umgekehrt oder es müssen die beiden Messerscheiben 18,20 gegeneinander ausgetauscht werden, was durch entsprechende Lagerung auf den Antriebswellen 14,16 ermöglicht werden kann.

Bei der dargestellten Ausführungsform weisen die Untermesser 24 jeweils schaufelartige Aufkantungen 32 auf, welche bei Drehung im Sinn der Pfeile 28,30 eine Ventilatorwirkung ausüben, die sich im Mittelbereich zwischen den beiden Messerscheiben 18,20 gegenseitig verstärkt.

Wie insbesondere aus den Figuren 4 bis 6 zu ersehen ist, weisen die Schneidmesser 22,24 jeweils Abkröpfungen 33 nahe dem Umfang der jeweiligen Messerscheibe 18,20 auf, wobei die beiden Abkröpfungen 33 voneinander wegweisen, so daß die beiden Schneidmesser 22,24 über den größeren Teil ihrer Längserstreckung einen größen Abstand voneinander aufweisen als im Bereich der jeweiligen Messerscheibe 18,20.

Das Gehäuse 10 bildet von seiner Vorderwand 34 zur rückwärtigen Öffnung 36, an die sich eine nicht gezeigte Grasfangeinrichtung oder dergl. anschließt, einen Auswurfkanal 38, oberhalb dessen ein Luftrücksaugkanal 40 mit einer vorderen Auslaßöffnung 42 gebildet ist. Der Abstand vom jeweiligen Obermesser 22 zur Oberseite 42 des Mähgehäuses 10 im Bereich der Messerscheiben 18,20 ist in Figur 2 mit 44 bezeichnet und kann erforderlichenfalls durch stärkere Abkröpfung der Obermesser 22 verringert werden.

Bei der dargestellten Ausführungsform sind, wie insbesondere aus den Figuren 4 bis 6 ersichtlich, die Schneidmesser 22,24 als sogenannte Fliehkraftmesser jeweils um senkrecht zur Messerscheibe 18,20 verlaufende Achsen 46 schwenkbar an der zugehörigen Messerscheibe 18,20 angelenkt. Jedes Messerpaar 22,24 ist mittels eines Bundbolzens 48, einer denselben umfassenden Bundbuchse 50 sowie einer auf den Bundbolzen 48 aufgeschraubten Mutter 52 unter Zwischenlage je einer Tellerfeder 54 jeweils ein Messer 22 bzw. 24 und die Messerscheibe 18,20 gegen die Kraft der Tellerfedern 54 schwenkbar gelagert, so daß sie beim Auftreffen auf Hindernisse ausweichen können und beim Weiterlaufen der Messerscheiben 18,20 durch Fliehkraft wieder radial nach außen ausgerichtet werden. In Fig.4 ist dargestellt, wie eines der Obermesser 22' gegenüber dem mit ihm ein Paar bildenden Untermesser 24 gegen die Drehrichtung 28 nach rückwärts ausgeschwenkt ist. Die gleiche Ausschwenkung ist auch bei den Obermessern 22' in Fig.3 dargestellt.

### Bezugszeichenliste

- 10: Gehäuse
- 14: Antriebswelle
- 16: Antriebswelle
- 18: Messerscheibe
- 20: Messerscheibe
- 22: Obermesser
- 24: Untermesser
- 26: Mittelebene
- 32: Aufkantung
- 33: Abkröpfung
- 34: Vorderwand
- 36: rückwärtige Öffnung
- 38: Auswurfkanal
- 40: Luftrücksaugkanal
- 42: vordere Auslaßöffnung
- 46: Achsen
- 48: Bundbolzen
- 50: Bundbuchse
- 52: Mutter
- 54: Tellerfeder

## Patentansprüche

1. Mähwerk für Rasenmäher mit einem Gehäuse und mindestens einer im Gehäuse angeordneten motorgetriebenen Messerscheibe, nahe deren Umfang Schneidmesser befestigt sind, dadurch gekennzeichnet, daß jeweils Paare einander gegenüberliegender Schneidmesser (22,24) von der Messerscheibe (18,20) im wesentlichen parallel zu dieser nach außen stehend an der Messerscheibe (18,20) befestigt sind, wobei jedes Paar aus einem an der Unterseite der Messerscheibe (18,20) befestigten Untermesser (24) und einem an der Oberseite der Messerscheibe (18,20) befestigten Obermesser (22) besteht.

2. Mähwerk nach Anspruch 1, dadurch gekennzeichnet, daß jedes Obermesser (24) nahe der Oberseite (42) des Gehäuses (10) verläuft.

3. Mähwerk nach Anspruch 1 oder 2, dadurch gekennzeichnet, daß die Schneidmesser (22,24) als Fliehkraftmesser ausgebildet und gegen Federkraft (54) schwenkbar an der Messerscheibe (18,20) befestigt sind.

4. Mähwerk nach einem der vorangehenden Ansprüche, dadurch gekennzeichnet, daß die Schneidmesser (22,24) jedes Paars außerhalb der Messerscheibe (18,20) voneinander wegweisende Abkröpfungen (33) aufweisen.

5. Mähwerk nach einem der vorangehenden Ansprüche, dadurch gekennzeichnet, daß wenigstens ein Schneidmesser (22,24) jedes Paars an der von seiner Schneidkante wegweisenden Seite eine zum anderen Schneidmesser (24,22) des Paars hinweisende schaufelartige Abkantung (32) aufweist.

6. Mähwerk nach Anspruch 5, dadurch gekennzeichnet, daß beide Schneidmesser (22,24) eine zum anderen Schneidmesser (24,22) des Paares hinweisende schaufelartige Abkantung (33) aufweisen.

7. Mähwerk nach einem der vorangehenden Ansprüche, dadurch gekennzeichnet, daß im Gehäuse (10) bezüglich der Mährichtung (12) nebeneinander zwei mit Schneidmessern (22,24) versehene gleichartige und gegenläufig angetriebene Messerscheiben (18,20) vorgesehen sind.

8. Mähwerk nach Anspruch 7, dadurch gekennzeichnet, daß die Drehbereiche der Schneidmesser (22,24) beider Messerscheiben (18,20) sich überlappen, wobei die Messerscheiben (18,20) gegenläufig synchron angetrieben und die Schneidmesser (22,24) der beiden Messerscheiben (18,20) gegeneinander winkelversetzt sind.

9. Mähwerk nach Anspruch 7 oder 8, dadurch gekennzeichnet, daß die Drehrichtung (28,30) der beiden Messerscheiben (18,20) umkehrbar ist.

10. Mähwerk nach Anspruch 7 doer 8, dadurch gekennzeichnet, daß die beiden Messerscheiben (18,20) auswechselbar sind.

11. Mähwerk nach einem der vorangehenden Ansprüche, dadurch gekennzeichnet, daß der untere Rand des Gehäuses (10) um den Drehbereich der Schneidmesser (22,24) herum nach innen gewölbt ist.
